# EUROPEAN PATENT APPLICATION

(11) **EP 2 876 539 A1**
(43) Date of publication of application: **27.05.2015**
(21) Application number: 14192556.0
(22) Date of filing: 10.11.2014
(51) Int. Cl.: G06F 3/0488, G06F 3/0485, G06F 3/14, G06F 9/44

(54) **Method, device and terminal apparatus for responding to a sliding operation**

(30) Priority: 20.11.2013 CN 201310586018
(71) Applicant: Xiaomi Inc., Beijing 100085 (CN)
(72) Inventor: Li, Weixing, Beijing (CN); Zhu, Cai, Beijing (CN); Sun, Daqing, Beijing (CN)
(74) Representative: Hanna, Peter William Derek

(57) **Abstract**

A method for responding to a sliding operation includes: when a system process detects the sliding operation, acquiring a sliding distance and a sliding direction of the sliding operation (101); the system process respectively transmitting the sliding distance and the sliding direction of the sliding operation to an application process and an interface delivery process (102); when the interface delivery process receives the sliding distance and the sliding direction, moving a display window in the sliding direction, according to the sliding distance (103); and the interface delivery process controlling the touch-screen to display a display content corresponding to the display window that has been moved (104). In the present invention, time that the interface delivery process waits for the application process to draw is reduced, and response's speed of the sliding operation is increased, such that synchronization of screen display and the sliding operation is enhanced.

## Description

### TECHNICAL FIELD

The present disclosure relates to the field of electronic technology, and more particularly, to a method, a device and a terminal apparatus for responding to a sliding operation.

### BACKGROUND

With the development of electronic technology, terminal apparatus using touch-screen have become increasingly popular; in particular, performing a sliding operation by dragging and dropping a finger upward or downward has become a standard operation mode for scrolling a document in a touch-screen device.

In the related art, Android based systems include a system process, an application process and an interface delivery process. During responding to the sliding operation, the application process and the interface delivery process allow the system process to receive the sliding operation and transmit a message of the sliding operation to the corresponding application process. Subsequently, the application process redraws the contents of the window as consequence of the sliding operation, and transmits the redrawn window's contents to the interface delivery process; The interface delivery process triggers a screen refresh, and output all the contents of the window onto the screen.

There are at least the following problems in the related prior art.

During responding to a sliding operation, it takes a longer time from when a system access acquires the sliding operation to when results corresponding to the sliding operation are output to a screen; it results in that the screen display, obviously, delays with respect to the sliding operation.

### SUMMARY

In order to overcome the problems in the related art, embodiments of the present disclosure provide a method, a device and a terminal apparatus for responding to a sliding operation in accordance with the claims which follow.

According to a first aspect of the embodiments of the present disclosure, there is provided a method for responding to a sliding operation, the method is applied to a terminal apparatus having a touch-screen, an operating system of the terminal apparatus includes a system process, an application process and an interface delivery process, the application process is configured to draw a display content, and a size of the display content drawn by the application process is larger than a size of the touch-screen, the method includes:
when the system process detects the sliding operation, acquiring a sliding distance and a sliding direction of the sliding operation;
the system process respectively transmitting the sliding distance and the sliding direction of the sliding operation to the application process and the interface delivery process;
when the interface delivery process receives the sliding distance and the sliding direction, moving a display window in the sliding direction, according to the sliding distance; and
the interface delivery process controlling the touch-screen to display a display content corresponding to the display window that has been moved.

Optionally, the method further includes:
when the application process determines that a display content indicated by the sliding distance exceeds the display content drawn by the application process, drawing an excess portion of the display content indicated by the sliding distance according to the sliding distance and the display content;
the application process transmitting the excess portion to the interface delivery process; and
correspondingly, the step of the interface delivery process controlling the touch-screen to display the display content corresponding to the display window that has been moved includes:
when the interface delivery process receives the excess portion, the interface delivery process controlling the touch-screen to display the display content corresponding to the display window that has been moved and the excess portion.

Optionally, the method further includes:
when the application process transmits the excess portion to the interface delivery process, the application process transmitting a position identification of the excess portion to the interface delivery process; and
correspondingly, the step of the interface delivery process controlling the touch-screen to display the display content corresponding to the display window that has been moved includes:
the interface delivery process controlling the touch-screen to display the display content corresponding to the display window that has been moved and the excess portion, according to the position identification of the excess portion.

Optionally, the step of when the interface delivery process receives the sliding distance and the sliding direction, moving the display window in the sliding direction, according to the sliding distance includes:
when the interface delivery process receives the sliding distance and the sliding direction, moving the display window by the sliding distance in the sliding direction.

According to a second aspect of the embodiments of the present disclosure, there is provided a device for responding to a sliding operation, the device is applied to a terminal apparatus having a touch-screen, the device includes: a system module, an application module and an interface delivery module; wherein,
the application module is configured to draw a display content, a size of the display content drawn by the application module is larger than a size of the touch-screen;
when the system module detects the sliding operation, a sliding distance and a sliding direction of the sliding operation is acquired;
the system module respectively transmits the sliding distance and the sliding direction of the sliding operation to the application module and the interface delivery module;
when the interface delivery module receives the sliding distance and the sliding direction, a display window is moved in the sliding direction, according to the sliding distance; and
the interface delivery module controls the touch-screen to display a display content corresponding to the display window that has been moved.

Optionally, the device further includes:
when the application module determines that a display content indicated by the sliding distance exceeds the display content drawn by the application module, drawing an excess portion of the display content indicated by the sliding distance according to the sliding distance and the display content;
the application module transmitting the excess portion to the interface delivery module; and
correspondingly, the device further includes:
when the interface delivery module receives the excess portion, the interface delivery module controlling the touch-screen to display the display content corresponding to the display window that has been moved and the excess portion.

Optionally, the device further includes:
when the application module transmits the excess portion to the interface delivery module, the application module transmitting a position identification of the excess portion to the interface delivery module;
correspondingly, the device further includes:
the interface delivery module controlling the touch-screen to display the display content corresponding to the display window that has been moved and the excess portion, according to the position identification of the excess portion.

Optionally, the device further includes:
when the interface delivery module receives the sliding distance and the sliding direction, moving the display window by the sliding distance in the sliding direction.

According to a third aspect of the embodiments of the present disclosure, there is provided a terminal apparatus having a touch-screen, an operating system of the terminal apparatus includes a system process, an application process and an interface delivery process, the application process is configured to draw a display content in a size larger than a size of the touch-screen, the terminal apparatus includes a storage and one or more programs, wherein the one or more programs are stored in the storage and are configured to be executed by one or more processors, the one or more programs include instructions for performing operations of:
when the system process detects a sliding operation, acquiring a sliding distance and a sliding direction of the sliding operation;
the system process respectively transmitting the sliding distance and the sliding direction of the sliding operation to the application process and the interface delivery process;
when the interface delivery process receives the sliding distance and the sliding direction, moving a display window in the sliding direction, according to the sliding distance; and
the interface delivery process controlling the touch-screen to display a display content corresponding to the display window that has been moved.

According to a fourth aspect of the embodiments of the present disclosure, there is provided a program product having stored therein instructions that, when executed by one or more processors of the terminal apparatus as above, causes the terminal apparatus to perform:
when the system process detects the sliding operation, acquiring a sliding distance and a sliding direction of the sliding operation;
the system process respectively transmitting the sliding distance and the sliding direction of the sliding operation to the application process and the interface delivery process;
when the interface delivery process receives the sliding distance and the sliding direction, moving a display window in the sliding direction, according to the sliding distance; and
the interface delivery process controlling the touch-screen to display a display content corresponding to the display window that has been moved.

The technical solutions provided by the embodiments of the present disclosure may include the following advantageous effects.

With the application process drawing a display content in a size larger than a size of the touch-screen, when the system process detects a sliding operation, the system process respectively transmits related data of the sliding operation to the application process and the interface delivery process, triggers the interface delivery process to move a display window on the drawn display content, so as to control the touch-screen to display a display content indicated by the sliding operation, thus the time that the interface delivery process waits for the application process to draw is reduced, and response's speed of the sliding operation is increased, such that synchronization of screen display and the sliding operation is enhanced.

### BRIEF DESCRIPTION OF THE DRAWINGS

The accompanying drawings, which are hereby incorporated in and constitute a part of this specification, illustrate embodiments consistent with the invention and, together with the description, serve to explain the principles of the invention.

The accompanying drawings described herein are included to provide a further understanding of the present disclosure and constitute a part of this application. In the drawings:
Fig. 1 is a flow chart showing a method for responding to a sliding operation, according to an illustrative embodiment;
Fig. 2 is a flow chart showing a method for responding to a sliding operation, according to an illustrative embodiment;
Fig. 3 is a block diagram illustrating a device for responding to a sliding operation, according to an illustrative embodiment;
Fig. 4 is a diagram illustrating time contrast of a sliding operation response, according to an illustrative embodiment;
Fig. 5 is a block diagram illustrating a device for responding to a sliding operation, according to an illustrative embodiment; and
Fig. 6 is an illustrative block diagram illustrating a terminal apparatus, according to an illustrative embodiment.

The apparent embodiments of the present disclosure are illustrated by the above-mentioned drawings, and detailed descriptions will be given hereinafter.

### DETAILED DESCRIPTION

Technical solutions and advantages of the present disclosure will be further described in detail in conjunction with embodiments and the drawings.

The embodiments of the present disclosure provide a method, a device and a terminal apparatus for responding to a sliding operation; the present disclosure is explained in detail below in combination with the drawings.

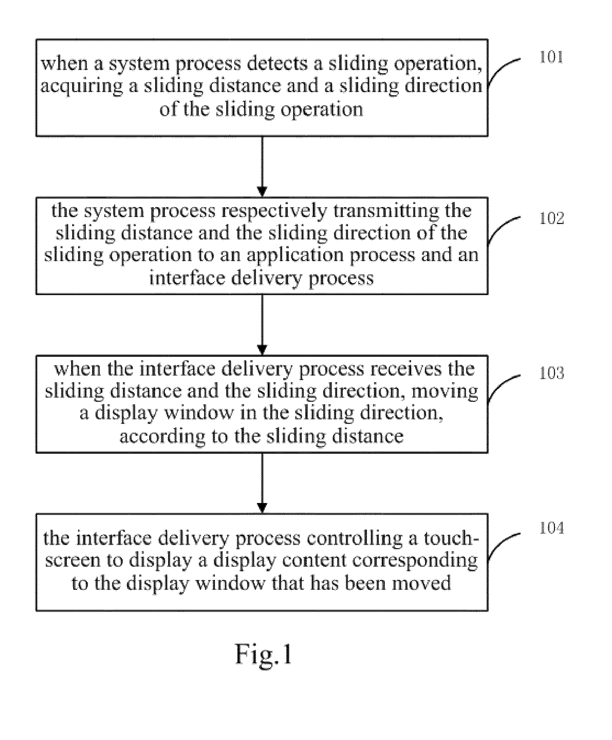

Fig. 1 is a flow chart of a method for responding to a sliding operation provided by an embodiment of the present disclosure. Referring to Fig. 1, the method is applied to a terminal apparatus having a touch-screen, an operating system of the terminal apparatus includes a system process, an application process and an interface delivery process, wherein the application process is configured to draw a display content in a size larger than a size of the touch-screen, the method includes the following steps.

In step 101, when the system process detects the sliding operation, a sliding distance and a sliding direction of the sliding operation is acquired.

In step 102, the system process respectively transmits the sliding distance and the sliding direction of the sliding operation to the application process and the interface delivery process.

In step 103, when the interface delivery process receives the sliding distance and the sliding direction, a display window is moved in the sliding direction, according to the sliding distance.

In step 104, the interface delivery process controls the touch-screen to display a display content corresponding to the display window that has been moved.

In the method provided by the embodiment of the present disclosure, the application process draws a display content in a size larger than a size of a touch-screen, when the system process detects a sliding operation, the system process respectively transmits related data of the sliding operation to the application process and the interface delivery process, triggers the interface delivery process to move a display window on the drawn display content, so as to control the touch-screen to display a display content indicated by the sliding operation, thus the time that the interface delivery process waits for the application process to draw is reduced, and response's speed of the sliding operation is increased, such that synchronization of screen display and the sliding operation is enhanced.

Optionally, the method further includes:
when the application process determines that a display content indicated by the sliding distance exceeds the display content drawn by the application process, the application process drawing an excess portion of the display content indicated by the sliding distance according to the sliding distance and the display content;
the application process transmitting the excess portion to the interface delivery process; and
correspondingly, the step of the interface delivery process controlling the touch-screen to display the display content corresponding to the display window that has been moved includes:
when the interface delivery process receives the excess portion, the interface delivery process controlling the touch-screen to display the display content corresponding to the display window that has been moved and the excess portion.

Optionally, the method further includes:
when the application process transmits the excess portion to the interface delivery process, the application process transmitting a position identification of the excess portion to the interface delivery process; and
correspondingly, the step of the interface delivery process controlling the touch-screen to display the display content corresponding to the display window that has been moved includes:
the interface delivery process controlling the touch-screen to display the display content corresponding to the display window that has been moved and the excess portion, according to the position identification of the excess portion.

Optionally, the step of when the interface delivery process receives the sliding distance and the sliding direction, moving the display window in the sliding direction, according to the sliding distance includes:
when the interface delivery process receives the sliding distance and the sliding direction, the interface delivery process moving the display window by the sliding distance in the sliding direction.

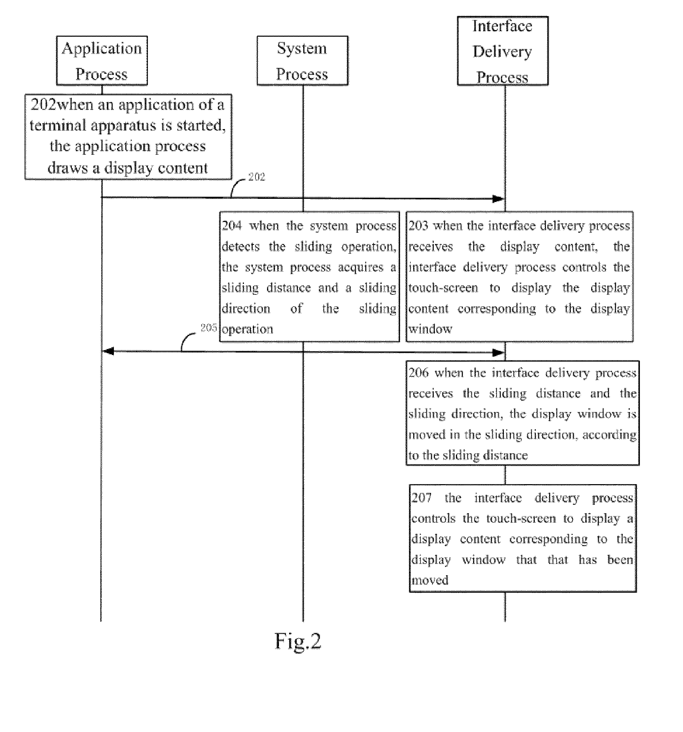

Fig. 2 is a flow chart of a method for responding to a sliding operation provided by an embodiment of the present disclosure. Referring to Fig. 2, the method is applied to a terminal apparatus having a touch-screen, an operating system of the terminal apparatus includes a system process, at least one application process and an interface delivery process, the method includes the following steps.

In step 201, when an application of the terminal apparatus is started, the application process draws a display content.

Each application process serves for one application, and the application process is configured to draw a display content of the application corresponding to the application process. The display content is a display content on an interface of the application. The display content of the application includes, but is not limited to, a background of the application and various objects of the application and the like. For a desktop while the terminal apparatus is started, the operating system of the terminal apparatus also has an application process that serves for the desktop in order to draw the desktop.

The size of the display content is larger than a size of the touch-screen, the size of the display content may be a preset multiple of the size of the touch-screen. The preset multiple may be set by a technical personnel during development, and may also be adjusted by a user during use, which is not limited in the present embodiment. For example, the preset multiple may be 1.2 times, to avoid pressure caused by a larger size of the display content on a memory of the terminal apparatus.

In step 202, the application process transmits the drawn display content to the interface delivery process.

In the present disclosure, the interface delivery process is configured to display the received display content, and move a display window on the drawn display content, to control the display content on the touch-screen. The display window may be configured to identify the display content on the touch-screen, that is, a content corresponding to the display window is the display content on the touch-screen.

Optionally, when the application process transmits the drawn display content to the interface delivery process, the application process may also simultaneously transmit a position identification of the drawn display content to the interface delivery process. The position identification may be coordinates. For example, the position identification of the display content is (1, 10) ∼ (1, 60).

In step 203, when the interface delivery process receives the display content, the interface delivery process controls the touch-screen to display the display content corresponding to the display window.

In the present embodiment, since the size of the display content is larger than the size of the touch-screen, the touch-screen may display a portion of the display content. When the interface delivery process receives the display content, the interface delivery process controls the touch-screen to display the content which corresponds to the display window and is required to be displayed when the terminal apparatus is initially started. For example, the position identification of the display content is (1, 10) ∼ (1, 60), a position identification of the content that is required to be displayed when the terminal apparatus is initially started is (1, 10) ∼ (1, 50), and the interface delivery process controls the touch-screen to display the content corresponding to the display window and having the position identification of (1, 10) ∼ (1, 50).

In step 204, when the system process detects the sliding operation, the system process acquires a sliding distance and a sliding direction of the sliding operation.

The system process is configured to respectively transmit related data of the sliding operation to the application process and the interface delivery process, when the system process detects the sliding operation.

The sliding operation may be a sliding operation on the interface of the application, for example, when a picture is displayed, the sliding operation is an operation of dragging the picture in a certain direction by a user through an operating interface, or, when a web content is displayed using a browser, the sliding operation may also be an operation of dragging the web content in a certain direction by a user through an operating interface.

In the present embodiment, when the system process detects the sliding operation, the system process may acquire the sliding distance and the sliding direction of the sliding operation according to a trajectory character input by a gesture of the sliding operation.

It is to be explained that the present embodiment is described only by the example in which when the system process detects the sliding operation, the sliding distance and the sliding direction of the sliding operation are acquired, but in another embodiment of the present disclosure, it may be that when the system process detects that a direction control button is triggered, a distance and a direction corresponding to the direction control button are acquired. The direction control button is configured to control the display content of the touch-screen to move a preset distance in a preset direction, the embodiment of the present disclosure does not particularly define the preset direction and a value of the preset distance.

In step 205, the system process respectively transmits the sliding distance and the sliding direction of the sliding operation to the application process and the interface delivery process.

In the present embodiment, the system process respectively transmits the sliding distance and the sliding direction of the sliding operation to the application process and the interface delivery process, so that when the interface delivery process receives the sliding distance and the sliding direction of the sliding operation, the interface delivery process controls the touch-screen to display a display content indicated by the sliding distance, without waiting for the application process to transmit the display content drawn by the application process, thus response's speed of the sliding operation is increased.

In step 206, when the interface delivery process receives the sliding distance and the sliding direction, the display window is moved in the sliding direction, according to the sliding distance.

In the present embodiment, when the display content indicated by the sliding distance does not exceed the display content drawn by the application process, the display content that has been drawn by the application process may satisfy a current display requirement of the sliding operation, and when the interface delivery process receives the sliding distance and the sliding direction, the display window is moved by the sliding distance in the sliding direction. For example, when the sliding distance of the sliding operation is 1cm, and the sliding direction is in a horizontal-left direction, the interface delivery process moves the display window by 1 cm in the horizontal-left direction.

In the present embodiment, when the display content indicated by the sliding distance exceeds the display content drawn by the application process, the display content drawn by the application process may not satisfy the current display requirement of the sliding operation, thus the application process receives the sliding distance and the sliding direction, and determines that the display content indicated by the sliding distance exceeds the display content drawn by the application process. The application process draws an excess portion of the display content indicated by the sliding distance according to the sliding distance and the display content, and transmits the excess portion and a position identification of the excess portion to the interface delivery process. When the application process receives the excess portion and the position identification of the excess portion, the display window is moved by the sliding distance in the sliding direction, so that the display window that has been moved corresponds to the display content and the excess portion. At this time, the interface delivery process displays a portion of the drawn display content together with the excess portion, the portion of the drawn display content may be displayed firstly, and then the excess portion, when being received, is displayed on the basis that the portion of the drawn display content is displayed, thus the response speed is increased while a display effect is guaranteed.

For example, the position identification of the display content drawn by the application process is (1, 50) ∼ (1, 60), the position identification of the display content indicated by the sliding distance is (1, 50) ∼ (1, 100), and the content having the position identification of (1, 60) ∼ (1, 100) is the excess portion. When the interface delivery process receives the content having the position identification of (1, 60) ∼ (1, 100) of the excess portion, the display window is moved by the sliding distance in the sliding direction, such that the display window that has been moved corresponds to the display content having the position identification of (1, 50) ∼ (1, 60) and the content having the position identification of (1, 60) ∼ (1, 100) of the excess portion.

Further, in the present embodiment, on the basis that the application process draws the excess portion of the display content indicted by the sliding distance, the application process may also draw an extra portion of display content (for example, 1.2 times with respect to the excess portion), so that when the system process detects a sliding operation again, the interface delivery process controls the touch-screen to display the extra drawn display content, thus time waiting for the application process to transmit the drawn display content is reduced, and response's speed of the sliding operation is increased.

In the embodiment of the present disclosure, a description is made by an example in which the sliding distance of the sliding operation is the same as a moving distance of the display window; of course, according to different system configures, the sliding distance of the sliding operation may be proportional to the moving distance of the display window, for example, the sliding distance of the sliding operation is 1cm, and the moving distance of the display window is 2cm.

In step 207, the interface delivery process controls the touch-screen to display a display content corresponding to the display window that has been moved.

In the present embodiment, when the display content indicated by the sliding distance does not exceed the display content drawn by the application process, the display window that has been moved corresponds to the display content, and the interface delivery process controls the touch-screen to display the display content corresponding to the display window that has been moved.

In the present embodiment, when the display content indicated by the sliding distance exceeds the display content drawn by the application process, the display window that has been moved corresponds to the display content and the excess portion, and the interface delivery process controls the touch-screen to display the display content corresponding to the display window that has been moved and the excess portion.

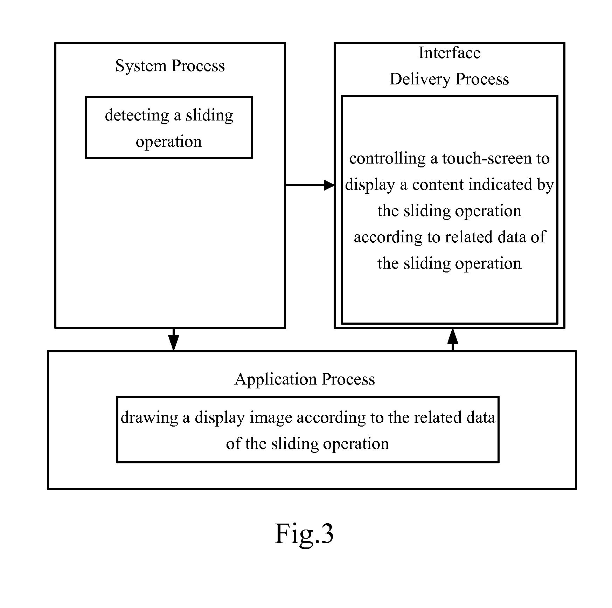

As shown in Fig. 3, when the system process detects the sliding operation, the system process respectively transmits related data of the sliding operation to the application process and the interface delivery process, when the display content indicated by the sliding distance does not exceed the display content drawn by the application process, the interface delivery process controls the touch-screen to display the display content indicated by the sliding distance. When the display content indicated by the sliding distance exceeds the display content drawn by the application process, the application process draws a content of the excess portion, and transmits the content of the excess portion to the interface delivery process, and the interface delivery process controls the touch-screen to display the display content indicated by the application process and the content of the excess portion, thus time waited for the application process to transmit the display content drawn by the application process and indicated by the sliding operation is reduced, and response's speed of the sliding operation is increased.

With respect to the related art, the method for responding to the sliding operation provided by the present embodiment greatly reduces the time from the sliding operation input to the screen output, for example, it is assumed that the size of the display content is 1.2 times larger than the size of the touch-screen, for an apparatus of 60 frame/second, the time from the sliding operation input to the screen output may be reduced by 16.6 milliseconds.

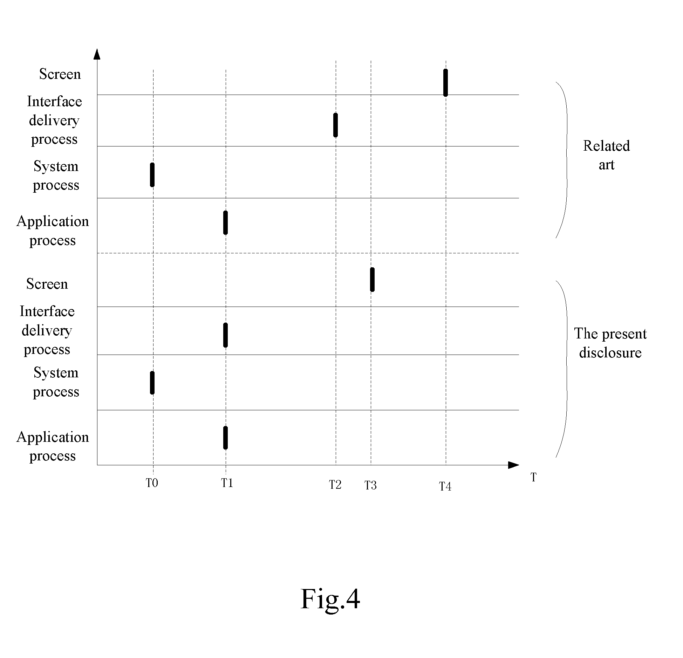

As shown in Fig. 4, in the related art, at timing T0, the system process detects the sliding operation, at timing T1, the application process receives the related data of the sliding operation, and draws the display image, at timing T2, the interface delivery process processes the display image, and at timing T4, the screen displays the display content indicated by the sliding operation. In the technology of the present disclosure, however, at timing T0, the system process detects the sliding operation, at timing T1, the application process receives the related data of the sliding operation, and draws the display image, at the same time, the interface delivery process receives the related data of the sliding operation, and processes the display image, at timing T3, the screen displays the display content indicated by the sliding operation. Thus, when the sliding operation is detected at the same time, with respect to the related art, the method for responding to the sliding operation provided by the embodiment of the present disclosure reduces the time from the sliding operation input to the screen output.

In the method provided by the embodiment of the present disclosure, with the application process drawing a display content in a size larger than a size of a touch-screen, when the system process detects a sliding operation, the system process respectively transmits related data of the sliding operation to the application process and the interface delivery process, triggers the interface delivery process to move a display window on the drawn display content, so as to control the touch-screen to display a display content indicated by the sliding operation, thus the time that the interface delivery process waits for the application process to draw is reduced, and response's speed of the sliding operation is increased, such that synchronization of screen display and the sliding operation is enhanced.

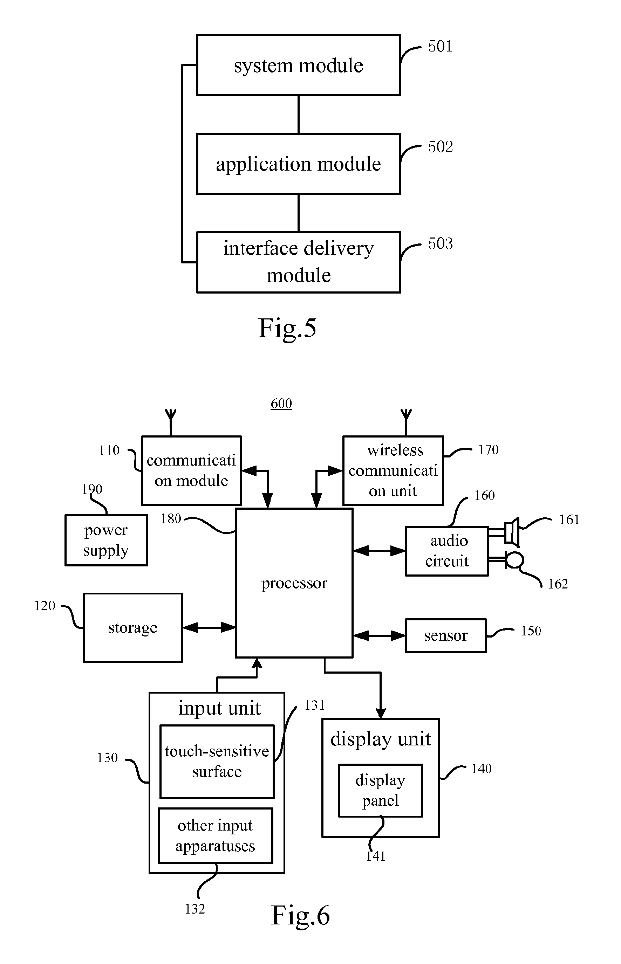

Fig. 5 is a block diagram of a device for responding to a sliding operation provided by an embodiment of the present disclosure. The device is applied to a terminal apparatus having a touch-screen. Referring to Fig. 5, the device includes a system module 501, an application module 502 and an interface delivery module 503.

The application module 502 is configured to draw a display content in a size larger than a size of the touch-screen;

The system module 501 is connected with the application module 502, the system module 501 is connected with the interface delivery module 503, and the application module 502 is connected with the interface delivery module 503. When the system module 501 detects the sliding operation, the system module 501 acquires a sliding distance and a sliding direction of the sliding operation. The system module 501 respectively transmits the sliding distance and the sliding direction of the sliding operation to the application module 502 and the interface delivery module 503. When the interface delivery module 503 receives the sliding distance and the sliding direction, the interface delivery module 503 moves a display window in the sliding direction, according to the sliding distance, and controls the touch-screen to display a display content corresponding to the display window that has been moved.

Optionally, the device further includes: when the application module 502 determines that a display content indicated by the sliding distance exceeds the display content drawn by the application module, the application module 502 drawing an excess portion of the display content indicated by the sliding distance according to the sliding distance and the display content, and transmitting the excess portion to the interface delivery module. Correspondingly, the device further includes: when the interface delivery module 503 receives the excess portion, the interface delivery module 503 controlling the touch-screen to display the display content corresponding to the display window that has been moved and the excess portion.

Optionally, the device further includes: when the application module 502 transmits the excess portion to the interface delivery module 503, the application module 502 transmitting a position identification of the excess portion to the interface delivery module 503. Correspondingly, the device further includes: the interface delivery module 503 controlling the touch-screen to display the display content corresponding to the display window that has been moved and the excess portion, according to the position identification of the excess portion.

Optionally, the device further includes: when the interface delivery module 503 receives the sliding distance and the sliding direction, the interface delivery module 503 moving the display window by the sliding distance in the sliding direction.

In the device provided by the embodiment of the present disclosure, with the application process drawing a display content in a size larger than a size of a touch-screen, when the system process detects a sliding operation, the system process respectively transmits related data of the sliding operation to the application process and the interface delivery process, triggers the interface delivery process to move a display window on the drawn display content, so as to control the touch-screen to display a display content indicated by the sliding operation, thus time that the interface delivery process waits for the application process to draw is reduced, and response's speed of the sliding operation is increased, such that synchronization of screen display and the sliding operation is enhanced.

It is to be explained that when the device for responding to the sliding operation provided by the above embodiments responds to a sliding operation, the division of the modules with functions as above is described only for illustration, and in actual applications, the above functions may be implemented by different modules as needed. That is, the internal structure of the device is divided into different modules, to realize all or a part of the above-described functions. In addition, the device for responding to the sliding operation provided by the above embodiments belongs to the same inventive concept as that of the method for responding to the sliding operation, and the specific implementing processes thereof may be found in the embodiments of the method, which are not described repeatedly.

Fig. 6 is an illustrative block diagram of a terminal apparatus provided by the embodiment of the present disclosure. Referring to Fig. 6, the terminal may be used to implement the method provided in the above embodiments.

A terminal apparatus 600 may include a communication unit 110, a storage 120 including one or more computer readable storage media, an input unit 130, a display unit 140, a sensor 150, an audio circuit 160, a WiFi (wireless fidelity) module 170, a processor 180 including one or more processing cores and a power supply 190 or the like.

The communication unit 110 may be used to receive and send signals in reception and sending of information or in a process of phone calling, and the communication unit 110 may be a network communication apparatus such as an RF (Radio Frequency) circuit, a router, a modem. Particularly, when the communication unit 110 is the RF circuit, after downlink information is received from a base station, the downlink information is processed by one or more processors 180; and in addition, uplink data is sent to the base station. Generally, the RF circuit as the communication unit includes an antenna, at least one amplifier, a tuner, one or more oscillators, a subscriber identity module (SIM) card, a transceiver, a coupler, a LNA (Low Noise Amplifier) and a duplexer, etc., but it is not limited thereto. Furthermore, the communication unit 110 may also communicate with a network and other apparatuses by wireless communication. The wireless communication may use any communication standard or protocol including GSM (Global System of Mobile communication), GPRS (General Packet Radio Service), CDMA (Code Division Multiple Access), WCDMA (Wideband Code Division Multiple Access), LTE (Long Term Evolution), E-mail, SMS (Short Messaging Service) or the like, but it is not limited thereto. The storage 120 may be used to store software programs and modules, and the processor 180 executes various kinds of function applications and data processing by operating the software programs and modules stored in the storage 120. The storage 120 may mainly include a program storing area and a data storing area, wherein the program storing area may store an operating system, at least one application program required for functions such as a sound playing function, an image playing function or the like; and the data storing area may store data such as audio data and a telephone book, etc., created in accordance with the use of the terminal apparatus 600. Furthermore, the storage 120 may include a high speed random access memory or a nonvolatile memory, or for example, at least one magnetic disk storage device, a flash memory device or other nonvolatile solid-state memory devices. Correspondingly, the storage 120 may also include a storage controller, to provide the processor 180 and the input unit 130 with an access to the storage 120.

The input unit 130 may be used to receive figures or character information that are input, and generate signal input of a keyboard, a mouse, an operating stick, an optical device or a trackball related to user settings and function control. For example, the input unit 130 may include a touch-sensitive surface 131 and other input apparatuses 132. The touch-sensitive surface 131 which is also referred to as a touch display screen or a touch panel, may collect touch operations from a user thereon or nearby (for example, operations on the touch-sensitive surface 131 or near the touch-sensitive surface 131 by a user using any appropriate object or accessory such as a finger, or a touch pen, etc.), and may drive a corresponding connecting device according to a preset program. Alternatively, the touch-sensitive surface 131 may include two portions including a touch detection device and a touch controller. Wherein the touch detection device detects touch orientations of a user, and detects signals brought up by touch operations, then transmits the signals to the touch controller; the touch controller receives touch information from the touch detection device, and converts the touch information into coordinates of touch points to be sent to the processor 180, and the touch controller receives commands sent from the processor 180 and execute the commands. Furthermore, the touch-sensitive surface 131 may be realized by using various types of manners such as resistance-type, capacitance-type, infrared ray and surface acoustic wave. In addition to the touch-sensitive surface 131, the input unit 130 may also include other input apparatuses 132. For example, the other input apparatuses 132 may include one or more physical keyboards, a function key (such as a volume control key, or a switching key, etc.), a trackball, a mouse and an operating stick, but it is not limited thereto.

The display unit 140 may be used to display information input by a user or information supplied to the user and various kinds of graphical user interfaces of the terminal apparatus 600, and these graphical user interfaces may consist of graph, text, icon, video or any combination thereof. The display unit 140 may include a display panel 141, and alternatively, the display panel 141 may be configured by using LCD (Liquid Crystal Display), OLED (Organic Light-Emitting Diode) or the like. Further, the touch-sensitive surface 131 may cover the display panel 141, and after the touch-sensitive surface 131 detects touch operations thereon or nearby, the touch-sensitive surface 131 transmits the touch operations to the processor 180 to determine types of touch events, subsequently, the processor 180 provides a corresponding visual output on the display panel 141 according to the types of the touch events. In Fig. 6, although the touch-sensitive surface 131 and the display panel 141 are two separate parts to realize input and output functions, in some certain embodiments, the touch-sensitive surface 131 and the display panel 141 may be integrated to realize the input and output functions.

The terminal apparatus 600 may also include at least one kind of sensor 150 such as a light sensor, a motion sensor and other sensors. For example, the light sensor may include an ambient light sensor and a proximity sensor, wherein the ambient light sensor may adjust luminance of the display panel 141 according to luminance of ambient light, the proximity sensor may turn off the display panel 141 and/or its backlight when the terminal apparatus 600 moves to an ear. As one of motion sensors, a gravity acceleration sensor may detect values of accelerations in respective directions (usually, three-axis), and may detect a value and a direction of gravity when in stationary state, and may be used in applications for identifying a phone pose (such as switching between horizontal and vertical screens, related games, magnetometer pose calibration), related functions of vibration identification (such as a pedometer, a knock), etc.; the terminal apparatus 600 may also be configured with other sensors such a gyroscope, a barometer, a hygrometer, a thermometer, an infrared sensor, etc., which are not described repeatedly.

The audio circuit 160, a speaker 161 and a microphone 162 may provide an audio interface between a user and the terminal apparatus 600. The audio circuit 160 may convert received audio data into electrical signals and transmit the electrical signals to the speaker 161, then the speaker 161 converts the electrical signals into sound signals to be output; on the other hand, the microphone 162 converts collected sound signals into electrical signals, the audio circuit 160 receives the electrical signals and converts the electrical signals into audio data, the audio data is output to the processor 180 to be processed, then the audio data is sent to another terminal apparatus through the RF circuit 110, or the audio data is output to the storage 120 to be further processed. The audio circuit 160 may include an earplug jack, to provide communication between a peripheral headset and the terminal apparatus 600.

In order to realize wireless communication, the terminal apparatus may be configured with a wireless communication unit 170, the wireless communication unit 170 may be a WiFi module. WiFi belonging to a short-distance wireless transmission technology, through which the terminal apparatus 600 may assistant a user to receive and send emails, browse webpage and access streaming media, provides the user with wireless broadband Internet access. Although Fig. 6 shows the wireless communication unit 170, it shall be understood that the terminal apparatus 600 does not have to include the wireless communication unit 170, and the wireless communication unit 170 may be completely omitted.

The processor 180 is a control center of the terminal apparatus 600, couples to respective parts of an entire telephone by using various kinds of interfaces and circuits, and executes various kinds of functions of the terminal apparatus 600 and processes data by operating or executing software programs and/or modules stored in the storage 120 and calling data stored in the storage 120, thereby to monitor the entire telephone. Alternatively, the processor 180 may include one or more processing cores; for example, the processor 180 may integrate an application processor and a modulation-demodulation processor, wherein the application processor mainly processes an operating system, a user interface and an application program, and the modulation-demodulation processor mainly processes wireless communication. It may be understood that the modulation-demodulation processor may not be integrated into the processor 180.

The terminal apparatus 600 also includes the power supply 190 (such as a battery) that supplies power to the respective parts, for example, the power supply may be logically coupled with the processor 180 by a power supply management system, thereby realizing functions such as management of charging, discharging and power consumption by the power supply management system. The power supply 190 may also include any component such as one or more DC or AC power supplies, a recharging system, a power supply failure detection circuit, a power supply converter or inverter, a power supply state indicator.

Although not shown, the terminal apparatus 600 may also include a camera, or a Bluetooth module, etc., which is not described repeatedly. In the present embodiment, an operating system of the terminal apparatus having a touch-screen includes a system process, an application process and an interface delivery process, the application process is configured to draw a display content in a size larger than a size of the touch-screen, the terminal apparatus further includes a storage and one or more programs, wherein the one or more programs are stored in the storage and are configured to be executed by the one or more processors, and the one or more programs include instructions for performing operations of:
when the system process detects the sliding operation, acquiring a sliding distance and a sliding direction of the sliding operation;
the system process respectively transmitting the sliding distance and the sliding direction of the sliding operation to the application process and the interface delivery process;
when the interface delivery process receives the sliding distance and the sliding direction, moving a display window in the sliding direction, according to the sliding distance; and
the interface delivery process controlling the touch-screen to display a display content corresponding to the display window that has been moved.

Optionally, the storage further includes instructions for completing processes of:
when the application process determines that a display content indicated by the sliding distance exceeds the display content drawn by the application process, drawing an excess portion of the display content indicated by the sliding distance according to the sliding distance and the display content;
the application process transmitting the excess portion to the interface delivery process; and
correspondingly and optionally, the storage further includes instructions for completing processes of:
when the interface delivery process receives the excess portion, the interface delivery process controlling the touch-screen to display the display content corresponding to the display window that has been moved and the excess portion.

Optionally, the storage further includes instructions for completing processes of:
when the application process transmits the excess portion to the interface delivery process, the application process transmitting a position identification of the excess portion to the interface delivery process;
correspondingly, the storage further includes instructions for completing processes of:
the interface delivery process controlling the touch-screen to display the display content corresponding to the display window that has been moved and the excess portion, according to the position identification of the excess portion.

Optionally, the storage further includes instructions for completing processes of:
when the interface delivery process receives the sliding distance and the sliding direction, moving the display window by the sliding distance in the sliding direction.

In an exemplary embodiment, there is provided a program product having stored therein instructions that, when executed by one or more processors of the terminal apparatus as above, causes the terminal apparatus to perform:
when the system process detects the sliding operation, acquiring a sliding distance and a sliding direction of the sliding operation;
the system process respectively transmitting the sliding distance and the sliding direction of the sliding operation to the application process and the interface delivery process;
when the interface delivery process receives the sliding distance and the sliding direction, moving a display window in the sliding direction, according to the sliding distance; and
the interface delivery process controlling the touch-screen to display a display content corresponding to the display window that has been moved.

In addition, the terminal apparatus according to the present disclosure may typically be various handheld terminal apparatuses such as a mobile phone, a personal digital assistant (PDA) and the like.

In addition, the method according to the present disclosure may also be implemented by a computer program executed by a CPU. When executed by the CPU, the computer program performs the above functions defined in the method according to the present disclosure.

In addition, the above steps of the method and the units of the system may also be implemented with a controller and a computer-readable storage device which stores computer programs that cause the controller to realize the above steps and functions of the units.

In addition, it should be appreciated that the above mentioned computer-readable storage device (such as storage) may be a volatile memory or a nonvolatile memory, or may include the both. For example, the nonvolatile memory may include a read only memory (ROM), a programmable ROM (PROM), an electrically programmable ROM (EPROM), an electrically erasable programmable ROM (EEPROM), or a flash memory. The volatile memory may include a random access memory (RAM) which may serve as an external cache RAM memory. As an example, the RAM may be of various forms, such as a synchronous RAM (DRAM), a dynamic RAM (DRAM), a synchronous DRAM (SDRAM), a double data rate SDRAM (DDR SDRAM), an enhanced SDRAM (ESDRAM), a synchronous link DRAM (SLDRAM) and a direct Rambus RAM (DRRAM). The storage device according to the disclosed aspects is intended to include but not limited to these and other suitable types of memories.

It should be appreciated that various exemplary logical blocks, modules, circuits, and algorithm steps described in conjunction with the present disclosure may be implemented as electronic hardware, computer software or combination of both. In order to clearly illustrate the interchangeability between the hardware and the software, a general description has been given to various illustrative components, blocks, modules, circuits and functions of steps. Whether such functions will be implemented as software or hardware depends on the particular application and the restriction from the design of the whole system.

Various illustrative logical blocks, modules and circuits described in conjunction with the present disclosure may be implemented or performed by the following components that are designed to perform the above functions: a general purpose processor, a digital signal processor (DSP), a dedicated integrated circuit (ASIC), a field programmable gate array (FPGA) or other programmable logic devices, discrete gates or transistor logics, discrete hardware components or any combination of these components. The general purpose processor may be a microprocessor. Alternatively, the processor may be any one of a conventional processor, a controller, a microcontroller, or a state machine. The processor may be implemented as combination of computing devices, such as combination of a DSP and a microprocessor, a plurality of microprocessors, one or more microprocessors in conjunction with a DSP core, or any other such configuration.

The method and steps of the algorithm described in conjunction with the present disclosure may be directly contained in hardware, in a software module executed by a processor or in combination of the both. The software module may reside in a RAM memory, a flash memory, a ROM memory, an EPROM memory, an EEPROM memory, a registers, a hard disk, a removable disk, a CD-ROM, or any other storage media known in the art. An exemplary storage medium is coupled to the processor such that the processor may read information from the storage medium or write information thereto. In an alternative embodiment, the storage medium may be integrated with the processor. The processor and the storage medium may reside in an ASIC which may reside in a user terminal. In an alternative embodiment, the processor and the storage medium may reside in a user terminal as discrete components.

In one or more exemplary designs, the above functions may be implemented in hardware, software, firmware, or any combination thereof. If implemented in software, the above functions may be stored in a computer readable medium as one or more instructions or codes, or transmitted through the computer readable medium. The computer readable medium includes computer storage medium and communication medium. The communication media includes any medium that may be used to transmit computer programs from one location to another location. The storage medium may be any available medium that is accessible by a general or special computer. For example, the computer readable medium may include a RAM, a ROM, an EEPROM, a CD-ROM or other CD storage devices, disk storage device or other magnetic storage devices, or any other medium that may be used to carry or store the required program codes in a form of instructions or data structure and may be accessible by a general or special computer or a general or special processor. In addition, any connection may be appropriately called as a computer-readable medium. For example, if a coaxial cable, a fiber optic cable, a twisted pair, a digital subscriber line (DSL) or wireless technologies such as infrared rays, radio and microwave are used to transmit software from a website, a server or other remote source, the above coaxial cable, the fiber optic cable, the twisted pair, the DSL or wireless technologies such as infrared rays, radio and microwave are all within the definition of the medium. As used herein, the disk and the optical disk include a compression disk (CD), a laser disc, an optical disk, a digital versatile disc (DVD), a floppy disks, a blue-ray disk, among which the magnetic disk normally represents data magnetically, and the optical disk represents data optically by utilizing a laser. The combination of the above contents should also be included in the scope of the computer readable medium.

Although the exemplary embodiments of the present disclosure has been illustrated in the above contents, it should be noted that, various changes and modifications may be made without departing the scope of the present disclosure that is defined by the claims. The functions, steps and/or operations of the method claims according to the described embodiments of the present disclosure, may not necessarily be performed in a particular order. In addition, although elements of the present disclosure may be described or prescribed in a single form, multiple forms may also be devised, unless the single form is explicitly prescribed.

The objects, technical solutions and advantageous effects of the present disclosure have been explained in a further detail with the above specific embodiments.

## Claims

1. A method for responding to a sliding operation, **characterized in that** the method is applied to a terminal apparatus having a touch-screen, an operating system of the terminal apparatus comprises a system process, an application process and an interface delivery process, the application process is configured to draw a display content in a size larger than a size of the touch-screen, the method comprises:
when the system process detects the sliding operation, acquiring a sliding distance and a sliding direction of the sliding operation (101);
the system process respectively transmitting the sliding distance and the sliding direction of the sliding operation to the application process and the interface delivery process (102);
when the interface delivery process receives the sliding distance and the sliding direction, moving a display window in the sliding direction, according to the sliding distance (103); and
the interface delivery process controlling the touch-screen to display a display content corresponding to the display window that has been moved (104).

2. The method according to claim 1, wherein the method further comprises:
when the application process determines that a display content indicated by the sliding distance exceeds the display content drawn by the application process, drawing an excess portion of the display content indicated by the sliding distance according to the sliding distance and the display content;
the application process transmitting the excess portion to the interface delivery process;
correspondingly, the step of the interface delivery process controlling the touch-screen to display the display content corresponding to the display window that has been moved (104) comprises:
when the interface delivery process receives the excess portion, the interface delivery process controlling the touch-screen to display the display content corresponding to the display window that has been moved (104) and the excess portion.

3. The method according to claim 1, wherein the method further comprises:
when the application process transmits the excess portion to the interface delivery process, the application process transmitting a position identification of the excess portion to the interface delivery process;
correspondingly, the step of the interface delivery process controlling the touch-screen to display the display content corresponding to the display window that has been moved (104) comprises:
the interface delivery process controlling the touch-screen to display the display content corresponding to the display window that has been moved (104) and the excess portion, according to the position identification of the excess portion.

4. The method according to claim 1, wherein the step of when the interface delivery process receives the sliding distance and the sliding direction, moving the display window in the sliding direction, according to the sliding distance (103) comprises:
when the interface delivery process receives the sliding distance and the sliding direction, moving the display window by the sliding distance in the sliding direction (206).

5. A device for responding to a sliding operation, **characterized in that** the device is applied to a terminal apparatus having a touch-screen, the device comprises: a system module (501), an application module (502) and an interface delivery module (503); wherein,
the application module (502) is configured to draw a display content in a size larger than a size of the touch-screen;
the system module (501), when detecting the sliding operation, acquires a sliding distance and a sliding direction of the sliding operation (101);
the system module (501) respectively transmits (102) the sliding distance and the sliding direction of the sliding operation to the application module (502) and the interface delivery module (503);
the interface delivery module (503), when receiving the sliding distance and the sliding direction, moves a display window in the sliding direction, according to the sliding distance (103); and
the interface delivery module (503) controls the touch-screen to display a display content corresponding to the display window that has been moved (104).

6. The device according to claim 5, wherein the device further comprises:
when the application module (502) determines that a display content indicated by the sliding distance exceeds the display content drawn by the application module (502), the application module (502) drawing an excess portion of the display content indicated by the sliding distance according to the sliding distance and the display content;
the application module (502) transmitting the excess portion to the interface delivery module (503); and
correspondingly, the device further comprises:
when the interface delivery module (503) receives the excess portion, the interface delivery module (503) controlling the touch-screen to display the display content corresponding to the display window that has been moved (104) and the excess portion.

7. The device according to claim 5, wherein the device further comprises:
when the application module (502) transmits the excess portion to the interface delivery module (503), the application module (502) transmitting a position identification of the excess portion to the interface delivery module (503);
correspondingly, the device further comprises:
the interface delivery module (503) controlling the touch-screen to display the display content corresponding to the display window that has been moved (104) and the excess portion, according to the position identification of the excess portion.

8. The device according to claim 5, wherein the device further comprises:
when the interface delivery module (503) receives the sliding distance and the sliding direction, the interface delivery module (503) moving the display window by the sliding distance in the sliding direction (206).

9. A terminal apparatus, **characterized in that** an operating system of the terminal apparatus having a touch-screen comprises a system process, an application process and an interface delivery process, the application process is configured to draw a display content in a size larger than a size of the touch-screen, the terminal apparatus further includes a storage and one or more programs, wherein the one or more programs are stored in the storage and are configured to be executed by one or more processors (180), the one or more programs comprise instructions for performing operations of:
when the system process detects the sliding operation, acquiring a sliding distance and a sliding direction of the sliding operation (101);
the system process respectively transmitting the sliding distance and the sliding direction of the sliding operation to the application process and the interface delivery process (102);
when the interface delivery process receives the sliding distance and the sliding direction, moving a display window in the sliding direction, according to the sliding distance (103); and
the interface delivery process controlling the touch-screen to display a display content corresponding to the display window that has been moved (104).

10. A program product having stored therein instructions, **characterized in that**, when executed by one or more processors (180) of the terminal apparatus according to claim 9, causes the terminal apparatus to perform:
when the system process detects the sliding operation, acquiring a sliding distance and a sliding direction of the sliding operation (101);
the system process respectively transmitting the sliding distance and the sliding direction of the sliding operation to the application process and the interface delivery process (102);
when the interface delivery process receives the sliding distance and the sliding direction, moving a display window in the sliding direction, according to the sliding distance (103); and
the interface delivery process controlling the touch-screen to display a display content corresponding to the display window that has been moved (104).

11. A computer program which when executing on a processor, performs the method according to any of claims 1 to 4.
